(19) Europäisches Patentamt
European Patent Office
Office européen des brevets

(11) **EP 1 795 445 A1**

(12) **EUROPEAN PATENT APPLICATION**
published in accordance with Art. 158(3) EPC

(43) Date of publication:
**13.06.2007 Bulletin 2007/24**

(51) Int Cl.:
***B64G 1/10*** *(2006.01)*  ***G01C 21/02*** *(2006.01)*

(21) Application number: **05745427.4**

(22) Date of filing: **28.04.2005**

(86) International application number:
**PCT/RU2005/000232**

(87) International publication number:
**WO 2005/118395 (15.12.2005 Gazette 2005/50)**

(84) Designated Contracting States:
**AT BE BG CH CY CZ DE DK EE ES FI FR GB GR HU IE IS IT LI LT LU MC NL PL PT RO SE SI SK TR**

(30) Priority: **04.06.2004 RU 2004116947**

(71) Applicant: **Zakrytoe Aktsionernoe Obschestvo"NPO Kosmicheskogo Priborostroenija"**
**Moscow, 111250 (RU)**

(72) Inventors:
• **URLICHICH, Jurij Matjevich**
**Moscow, 109360 (RU)**

• **POPOVKIN, Vladimir Aleksandrovich**
**Moscow, 119571 (RU)**
• **DVORKIN, Vjacheslav Vladimirovich**
**Moscow, 113461 (RU)**
• **SELIVANOV, Arnold Sergeevich**
**111020 Moscow (RU)**
• **GORBULIN, Vladimir Ivanovich**
**St.Petersburg, 194352 (RU)**
• **FATEEV, Vjacheslav Filippovich**
**St.Petersburg, 197110 (RU)**

(74) Representative: **Engel, Christoph Klaus**
**Engel Patentanwaltskanzlei**
**Marktplatz 6**
**98527 Suhl/Thüringen (DE)**

(54) **METHOD FOR FORMING AN ON-ORBIT NAVIGATION SATELLITE SYSTEM**

(57) The invention relates to space engineering and can be used for developing satellite system for object positioning on the earth surface. Said invention makes it possible to reduce the number of artificial earth satellites without deteriorating the parameters of a ground object positioning system. The inventive method for forming an on-orbit navigation satellite system consists in placing N artificial earth satellites operating on n planes (n is integer >2) onto circular or other orbits by $m_i$ satellites on each plane, wherein i=1, n is an integer. The invention is **characterized in that** said artificial earth satellites are placed on the base plane orbits and on planes which are disposed symmetrically pairwisely with respect thereto, wherein said orbital planes of the artificial earth satellites are arranged with respect to the base plane at angles which are a priori unequal to 360/n and the artificial earth satellites are disposed on the orbital planes nonuniformly and symmetrically pairwisely with respect to a base artificial earth satellite.

FIG. 1

**Description**

The present invention relates to space technology and can be used in designing satellite systems for positioning of objects on the Earth surface.

Known in the art is a method for surveying the Earth surface from space including injection of artificial satellites into multiple geosynchronous orbits with inclination $\tau = \arccos(n/m)$ (1), where m and n stand respectively for the numbers of nodical orbital periods of revolution of each of the satellites and the Earth effective revolution periods in one satellite path recurrence period, and onboard formation of images of ground objects in survey lanes proportional in width (180°/m) .

The known method permits continuous survey of the Earth surface with a reduced number of required artificial satellites at a given width of the survey lane.

The disadvantage of the known method consists in that it requires a relatively large width of the survey lane which can be reduced without detriment to the advantages of the method only by a special arrangement of satellites in their orbits (see USSR Author's Certificate No. 297930, cl. B 64G 1/10, 1988).

Known in the art is also a METHOD FOR SURVEYING EARTH SURFACE FROM SPACE, including injection of artificial satellites into multiple geosynchronous orbits with inclination

$$\tau = \arccos(n/m),$$

where m and n represent respectively the numbers of nodical orbital periods of revolution of each of the satellites and the Earth effective revolution periods in one satellite path recurrence period and onboard formation of images of ground objects in survey lanes proportional in width (180°/m), wherein, with a view to decreasing the width of the survey lane required for each of the artificial satellites proportionally to their total number (N) without detriment to the continuous mode of survey of the Earth surface, the satellites are put into their orbits in such a way that they pass the Earth equator simultaneously at distances between them equal to

$$180°/(mN) \text{ with } N2K \text{ and } 360/(mN) \text{ with } N2K+1,$$

where K is a natural number (see RU 2058917, cl. B 64G 1/10, 1996).

The prior art also knows systems for arrangement of satellites in their orbits for the purpose of positioning ground objects (US 6727850, G01S 5/14, 27.04.2004, CA 2439014, B60R 11/02, 11.03.2004, WO 200431909, G06F, 15.04.2004, TW 539865, G01S1/00, 2003).

The nearest in technical embodiment to the proposed method is the method for construction of a Galileo (all-European) orbital system according to which artificial Earth satellites are put into three orbital planes, ten satellites in each, nine of which being active and one being assigned a stand-by function. In this configuration active satellites are arranged in the orbit at 40-degrees intervals, whereas the stand-by satellite may occupy any position in the orbit. The orbital planes are spaced uniformly around the equator (at 120 degrees intervals). (Razumny Yu.N. "Synthesis of orbital designs of satellite systems for periodical survey", Moscow, Publ. MGTU, 200, 104 pages).

The disadvantage of the aforesaid technical solutions consists in the necessity to put into orbits a considerable number of artificial Earth satellites.

It is an object of this invention to reduce the number of artificial Earth satellites without worsening the performance characteristics of the ground objects positioning system.

Said object is achieved by the disclosed method for forming an on-orbit navigation satellite system consisting in the injection into circular and other orbits of a number of artificial Earth satellites circling in n planes (where n represents a whole number larger than 2) with $m_i$, where i = 1,...n satellites in each plane (where n represents a whole number and m stands for the number of nodical orbital periods of revolution of each of the satellites) and characterized in that artificial Earth satellites are put into orbits lying in the base plane and in pairs of planes symmetrical about the base plane, said pairs of planes making a-priori angles not equal to 360°/n with respect to the base plane, and said artificial Earth satellites making pairs and being spaced in their orbits irregularly but symmetrically about the base artificial Earth satellite.

The proposed method of construction of a global navigation satellite system will now be described in detail.

Modern systems (such as GLONASS and Galileo) are typically designed in accordance with the rule or method for construction of kinematically correct configurations in which the orbiting artificial Earth satellites check at some initial moment with the vertices of a certain symmetric crystal lattice. In theory, an increase in the number of satellites should lead to an improvement in the characteristics of such a system. However, cases are on record when an increase in the number of satellites from 11 to 12, from 14 to 15 and from 20 to 21 had an adverse effect on the performance of the system. Hence, optimization of an orbital configuration with a limited number of satellites within a selected class of systems does not lead to optimization of the system design.

The proposed method of forming a navigation system is based on the ideas of differential calculus and mathematical programming which make it possible to successively define the necessary increments in the initial position of one or several artificial Earth satellites of the system with a view to improving the performance characteristics of the system.

It is known from theory that for achieving ballistic stability of a system the orbits of all its artificial Earth satellites should be located at the same height and have equal inclinations. If these requirements are not satisfied, the influence of the Earth's off-center gravitational field will cause the planes of the satellite orbits to precess along the equator at different speeds. As a result, the relative angular position of orbit planes will be constantly changing and the system will not be able to achieve its purpose.

According to the proposed method, the artificial Earth satellites should be put into orbits in planes symmetric about the base plane and located at different angles (other than 360°/n) with respect to it (for instance, in the case of the disclosed system with three planes two planes are arranged at equal angles other than 120° with respect to the base plane in contrast to the Galileo system, in which the artificial Earth satellites are arranged in planes located at 120° relative to one another, i.e. uniformly).

In the proposed method the planes of the orbits are to be arranged not uniformly along the Earth's equator, but in symmetrical pairs. In order to achieve the goal of establishing the coordinates of ground objects with irregular location of orbital planes, it is necessary to arrange the satellites orbiting within the limits of each plane in an irregular manner too. In the proposed method the artificial Earth satellites should be arranged in pairs symmetric about the base satellite.

Now, the meanings of the terms "base plane" and "base satellite" need to be defined more accurately, which calls for some explanation. By base plane is meant an orbital plane of an artificial Earth satellite which is placed in an arbitrary position and serves as a reference for setting the positions of other symmetric pairs of orbital planes. If the number of orbital planes n is even, the base plane is virtual, i.e. it does not have any satellites and represents the center of symmetry for other pairs of orbital planes.

By base satellite is meant one of the satellites in the orbit which serves as a reference for setting the positions of other satellites in the system of artificial Earth satellites which form symmetric pairs at some initial moment. The base satellite may be virtual, representing a certain point in its orbital plane which moves along its orbit in the same manner, as all other artificial Earth satellites of the system and serves at some initial moment as the center of the system relative to which all other satellites are arranged in symmetric pairs. If the central plane is virtual, i.e. if the number of orbital planes is even, the base satellite is bound to be virtual too. Besides, the base satellite may be virtual, if the number of satellites in the plane is even.

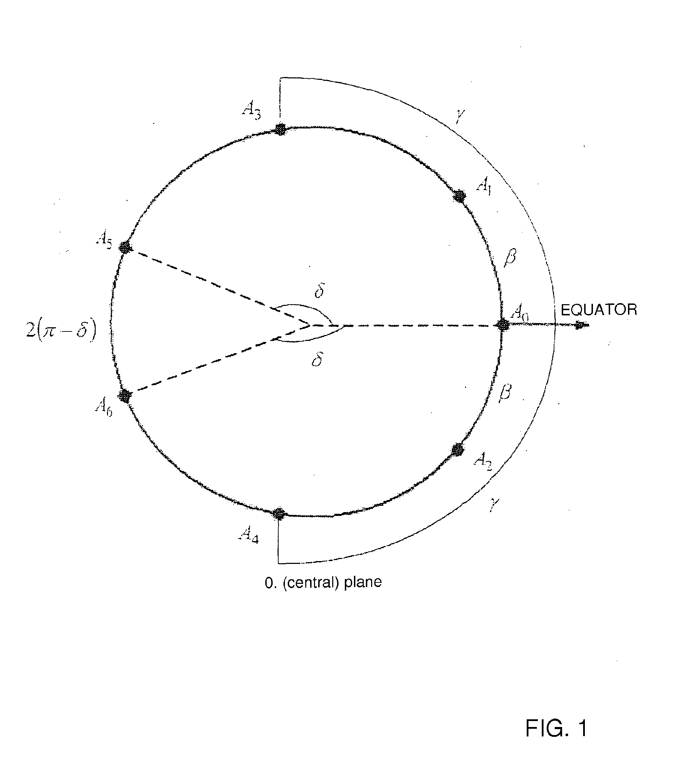

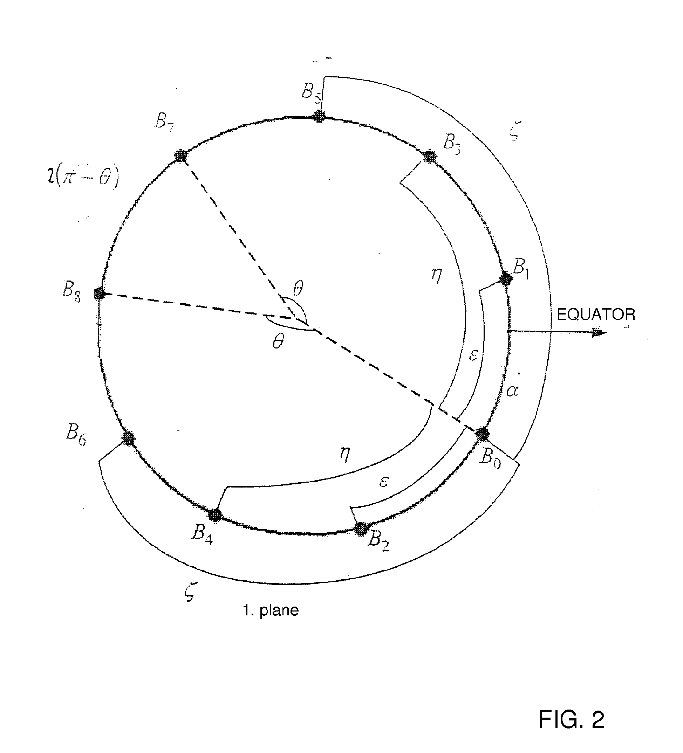

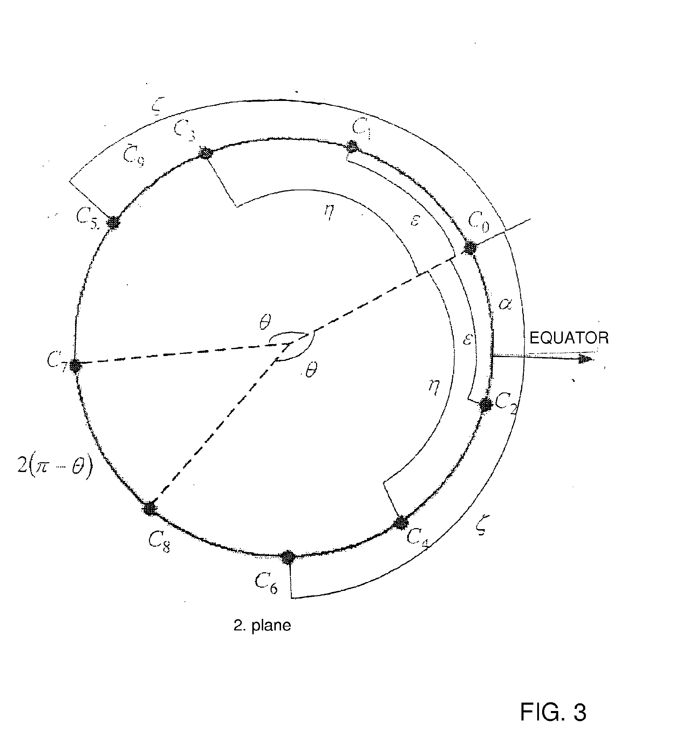

Figures 1, 2 and 3 represent the positions of artificial Earth satellites in the orbits in three respective planes. The method of optimization of the orbital configuration of global satellite systems (the mathematical apparatus of such optimization) is described in the "Flight" (Polyot) magazine No. 12, 2001, pages 20-26.

The table that follows presents comparative data of the Galileo system and the system disclosed in the description of the proposed method.

Table

| Description | Prior art variant | Proposed variant |
| --- | --- | --- |
| Number of satellites | 30 | 28 |
| Number of carrier rocket launches | 6 | 5 |
| Number of orbital planes | 3 | 3 |
| Number of satellites in orbital planes | 10+10+10 | 10+10+8 |
| Number of stand-by satellites in orbital planes | 1+1+1 | 1+1+1 |
| System development cost | 100% | 93,33% |
| Relative system accuracy characteristics | 100% | 96-97% |
| Relative system reliability characteristics | 100% | 1109,5% |

As the results of studies show, the system according to the claimed method is less expensive, more reliable in operation and provides the required quality level, i.e. is superior to the known system in terms of the price-quality indicator.

**Claims**

1. A method for forming an on-orbit navigation system comprising an injection into circular and other orbits of a number of artificial Earth satellites circling in n planes (where n represents a whole number larger than 2) with $m_i$, where i = 1,...n satellites in each plane (where n represents a whole number and m stands for the number of nodical orbital periods of revolution of each of the satellites) **characterized in that** artificial Earth satellites are put into orbits lying in the base plane and in pairs of planes symmetrical about the base plane, said pairs of planes making a-priori angles not equal to 360°/n with respect to the base plane, and said artificial Earth satellites making pairs and being spaced in their orbits irregularly but symmetrically about the base artificial Earth satellite.

FIG. 1

FIG. 2

2. plane

FIG. 3

## INTERNATIONAL SEARCH REPORT

| International application No. |
|---|
| PCT RU2005/000232 |

**A. CLASSIFICATION OF SUBJECT MATTER**

B64G 1/10, G01C 21/02

According to International Patent Classification (IPC) or to both national classification and IPC

**B. FIELDS SEARCHED**

Minimum documentation searched (classification system followed by classification symbols)

B64G 1/10, G01C 21/02, G01S 5/02, B64G 3/00, 1/00, 9/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 6050525 A (JOHN HOWARD DRAKE) 18.04.2000 | 1 |
| A | RU 2059540 C1 (VOISKOKAYA CHAST 73790) 10.05.1996 | 1 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 August 2005 (16.08.05) | 08 September 2005 (08.09.05) |

| Name and mailing address of the ISA/ | Authorized officer |
|---|---|
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2058917
- US 6727850 B
- CA 2439014
- WO 200431909 A
- TW 539865

**Non-patent literature cited in the description**

- *Flight,* 2001, vol. 12, 20-26